## Europäisches Patentamt
## European Patent Office
## Office européen des brevets

(19)

(11) Numéro de publication: **0 035 434**
**B1**

(12)

# FASCICULE DE BREVET EUROPEEN

(45) Date de publication du fascicule du brevet:
**03.07.85**

(51) Int. Cl.⁴: **H 04 L 27/00, H 04 L 25/49**

(21) Numéro de dépôt: **81400269.7**

(22) Date de dépôt: **20.02.81**

(54) **Dispositif émetteur et dispositif récepteur pour la transmission de signaux numériques.**

(30) Priorité: **05.03.80 FR 8004947**

(43) Date de publication de la demande:
**09.09.81 Bulletin 81/36**

(45) Mention de la délivrance du brevet:
**03.07.85 Bulletin 85/27**

(84) Etats contractants désignés:
**BE DE GB IT NL SE**

(56) Documents cités:
**DE - A - 2 755 522**
**FR - A - 2 240 580**
**FR - A - 2 351 547**

(73) Titulaire: **THOMSON-CSF, 173, Boulevard Haussmann,
F-75379 Paris Cedex 08 (FR)**

(72) Inventeur: **Dehaene, Jean-Pierre, THOMSON-CSF
SCPI 173, bld Haussmann, F-75360 Paris Cedex 08 (FR)**

(74) Mandataire: **Weinmiller, Jürgen et al, Zeppelinstrasse 63,
D-8000 München 80 (DE)**

## Description

La présente invention se rapporte, en particulier, à un dispositif émetteur et à un dispositif récepteur propres à coopérer pour la transmission de signaux numériques ayant une composante continue nulle.

Il est connu d'effectuer une transmission analogique de signaux numériques ayant une composante continue nulle. La transmission peut se faire à l'aide d'un système utilisant une modulation de fréquence à l'émission et une démodulation par discriminateur à la réception. Mais un tel système est incohérent, en effet l'information n'est pas détectée par rapport à une référence du support de transmission mais par rapport à l'information précédente qui peut être entachée d'erreurs. Il est également connu de transmettre des signaux numériques ayant une composante continue nulle en effectuant un décodage de ces signaux avant leur émission et un codage lors de leur réception; ce décodage puis ce codage entraînent des risques de perte d'information.

Il est à noter qu'il est également connu de transmettre des signaux numériques ayant une composante continue nulle, par modulation de phase; à la réception le signal à fréquence intermédiaire présente un spectre correspondant au spectre translaté du signal numérique et sans fréquence porteuse; il faut alors, pour récupérer la porteuse, procéder de façon classique avec, en particulier, une multiplication par deux du signal, mais une telle multiplication entraîne un effet de seuil dû au rapport signal sur bruit à l'entrée du multiplicateur et une instabilité de phase (jitter dans la littérature anglo-saxonne) due à des résidus de modulation.

La présente invention a pour but d'éviter les inconvénients précités.

Selon l'invention, ceci est obtenu à l'émission, notamment en multipliant le signal numérique modulant par son propre rythme, et en réalisant pour cela un dispositif émetteur tel qu'il est décrit dans la revendication 1 ci-jointe.

Selon l'invention ceci est obtenu, à la réception, par un dispositif récepteur tel que décrit dans la revendication 3 ci-jointe.

Il est par ailleurs à noter que la combinaison de circuits décrite dans la revendication 1 de la présente demande présente certaines analogies avec le montage décrit dans la demande DE-A-2 755 522. Dans la demande DE-A-2 755 522 il s'agit de translater le spectre de fréquence d'un signal codé, en particulier en remplaçant chaque bit «un» par un nombre impair (n) d'impulsions alternées. Pour cela le signal codé est d'abord multiplié par un signal rectangulaire dont la fréquence est la «demi fréquence d'apparition des bits du signal codé», puis il est multiplié par un signal dont la fréquence est n fois la «demi fréquence d'apparition des bits du signal codé»; le signal résultant de ces deux multiplications est transformé de manière à présenter une durée d'impulsion réduite. Mais il n'est nullement question, dans cette demande, d'utiliser les signaux ainsi obtenus pour les appliquer à l'entrée d'un modulateur de fréquence dans le but de générer une raie à la fréquence porteuse qui simplifiera la démodulation.

La présente invention permet, en particulier, la transmission simple et sûre de signaux numériques ayant une composante continue nulle.

La présente invention sera mieux comprise et d'autres caractéristiques apparaîtront à l'aide de la description ci-après et des figures s'y rapportant qui représentent:

– la figure 1 le schéma d'un dispositif émetteur selon l'invention,

– la figure 2 un graphique relatif à des signaux du dispositif selon la figure1,

– la figure 3 le schéma d'un dispositif récepteur selon l'invention.

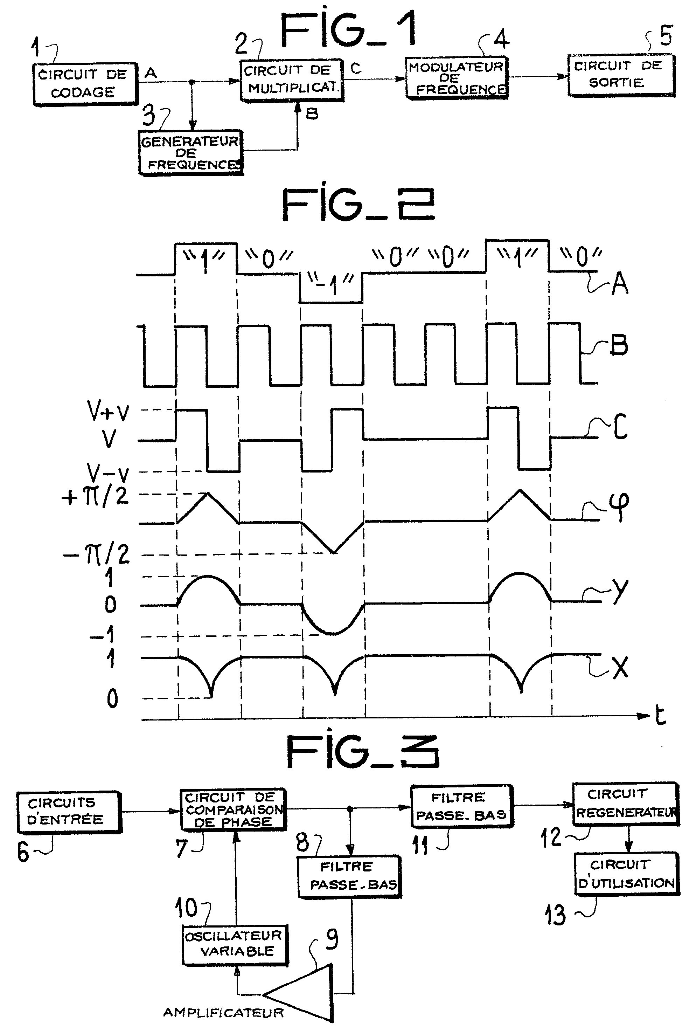

La figure 1 représente un circuit de codage, 1, qui délivre un signal A codé selon le code HDB3 (code bipolaire à haute densité ne présentant pas plus de trois zéros consécutifs); ce signal A est représentatif d'informations fournies au circuit 1. Le signal délivré par le circuit de codage (courbe A, figure 2) étant codé selon le code HDB3 ne présente, de par le principe même du codage, aucune énergie à la fréquence zéro; ce signal formé d'éléments «0», «1» et «−1» de durée T, est appliqué sur la première entrée d'un circuit de multiplication, 2, qui reçoit sur sa seconde entrée un signal rectangulaire B (courbe B, figure 2). Ce signal rectangulaire B a une fréquence égale à $\dfrac{1}{T}$ qui correspond donc au rythme $f_r$ du signal codé A. Par rythme ou rythme du signal codé ou rythme de signaux numériques, on entend, ici et dans les revendications, la fréquence correspondant à la période de valeur égale à la durée minimale T de chacun des états du signal codé; le rythme peut être considéré comme la fréquence maximale de changement d'état du signal; dans l'exemple décrit, à chaque élément d'information «1», «0», «−1» correspond un seul état, le rythme $f_r$ est donc égal au débit des informations transportées par le signal codé. Dans le cas de l'exemple décrit $f_r$ = 34 MHz. Un générateur de fréquence, 3, synchronisé sur les fronts du signal codé, fournit ce signal rectangulaire.

Le signal C fourni par le circuit de multiplication, 2, (courbe C, figure 2) est appliqué à l'entrée d'un modulateur de fréquence, 4, pour être transformé en un signal à fréquence intermédiaire. Ce signal à fréquence intermédiaire est appliqué à des circuits de sortie, 5, qui comportent un circuit de transposition de fréquences et une antenne d'émission.

La multiplication du signal codé par son propre rythme dans le circuit 2 peut s'interpréter comme une sorte de dérivation qui compense l'intégration que crée le modulateur de fréquence dans l'information de phase obtenue à sa sortie.

Le signal C du circuit de multiplication a une amplitude V pendant la durée des «0» du signal codé fourni par le circuit de codage 1, des amplitudes V+v et V−v pendant respectivement la première et la seconde moitié de la durée T des «1» du signal codé, et des amplitudes V − v et V + v pendant respectivement la première et la seconde moitié de la durée T des « − 1» du signal codé. Le modulateur de fréquence 4 transforme ces signaux d'amplitude V, V + v et V − v respectivement en signaux de fréquences F, F + dF et F − dF. Le réglage du modulateur et le choix des valeurs V et v sont tels que la variation de phase à laquelle est équivalent le saut de fréquence dû à la tension V ± v appliquée au modulateur pendant des durées égales à $\frac{T}{2}$ est de $\pm\frac{\pi}{2}$. Cette variation de phase de la fréquence porteuse modulée par le signal C est représentée par la courbe $\varphi$ de la figure 2.

Sur la figure 2 ont également été représentées deux courbes, Y et X, donnant les coordonnées Y et X, en fonction du temps, du vecteur OM représentatif, sur un diagramme de FRESNEL, de la variation de phase de la porteuse obtenue à la sortie du modulateur de fréquence; en d'autres termes ces courbes donnent les coordonnées du vecteur OM dont l'extrémité décrit le cercle trigonométrique d'axes OX et OY, en faisant avec l'axe OX l'angle $\varphi$ défini par la courbe $\varphi$ de la figure 2.

Le signal codé A (figure 2) porteur de l'information HDB3 se retrouve avec une mise en forme sinusoïdale dans la coordonnée Y de l'angle $\varphi$.

La coordonnée X possède une composante continue dont l'amplitude est modulée par l'information. En donnant, comme indiqué sur la figure 2, les valeurs 0 et 1 respectivement aux amplitudes minimales et maximales la composante continue peut varier de l'amplitude 1 (cas des «0» successifs) à l'amplitude $\frac{2}{\pi}$ (cas d'une suite de «1» et de « − 1»).

Ainsi le signal à fréquence intermédiaire que délivre le modulateur de fréquence 4 (figure 1) se compose de deux voies: une voie Y qui contient l'information et une voie X dont le spectre de fréquences contient une raie à la fréquence porteuse qui va permettre, à la réception, de récupérer une porteuse pour démoduler de façon cohérente la voie Y. Il est à remarquer de plus que cette porteuse n'est pas entachée de bruit de phase du fait que la voie Y ne possède pas de densité d'énergie aux basses fréquences (codage HDB3); la démodulation cohérente de phase, à la réception, va donc se trouver simplifiée.

La figure 3 est le schéma d'un dispositif récepteur destiné à coopérer avec le dispositif émetteur selon la figure 1.

La figure 3 représente les circuits d'entrée, 6, du dispositif récepteur; ces circuits d'entrée comportent, en particulier, une antenne de réception et les circuits de transposition de fréquences qui permettent d'obtenir, sur la sortie des circuits d'entrée, un signal à fréquence intermédiaire correspondant au signal à fréquence intermédiaire fourni par le démodulateur de fréquence 4 de la figure 1.

Ce signal à fréquence intermédiaire est appliqué sur la première entrée d'un circuit de comparaison de phase 7 dont la sortie est réunie à l'entrée d'un filtre 8. Le signal de sortie de ce filtre 8 est amplifié par un amplificateur ajustable 9 dont la sortie est reliée à l'entrée de commande d'un oscillateur variable 10. La sortie de l'oscillateur variable est reliée à la seconde entrée du circuit de comparaison de phase 7.

La sortie du circuit de comparaison 7 est également réunie à l'entrée d'un filtre 11 suivi d'un circuit régénérateur 12, lui-même suivi d'un circuit d'utilisation 13.

Les éléments 8, 9 et 10 forment, associés au circuit de comparaison de phase 7, une boucle d'asservissement de phase classique. Cette boucle sert à récupérer la porteuse dans le signal à fréquence intermédiaire délivré par les circuits d'entrée 1.

Dans cette boucle le circuit de comparaison de phase est un mélangeur en anneau dont le signal de sortie a la valeur nulle quand les signaux sur ses deux entrées sont en quadrature. Le filtre 8 est un filtre de type passe-bas étudié pour déterminer un asservissement du second ordre avec la boucle d'asservissement, c'est-à-dire un asservissement dont la fonction de transfert présente deux pôles. La bande équivalente de bruit de la boucle qui a servi d'exemple pour la présente description, est de l'ordre du dizième du débit d'information, c'est-à-dire du dizième du rythme, soit

$$\frac{f_r}{10} = 3,4 \text{ MHz.}$$

L'asservissement de phase se fait par une quadrature, c'est-à-dire que la porteuse du signal à fréquence intermédiaire et le signal $V_0$ délivré par l'oscillateur variable, quand ils sont asservis, sont décalés de $\frac{\pi}{2}$. L'opération de comparaison de phase est un produit scalaire, or la porteuse reçue est mélangée au signal $V_0$ fourni par l'oscillateur variable qui est en quadrature, autrement dit, qui est en phase avec la voie Y qui supporte l'information; ainsi le produit scalaire du signal $V_0$ avec la porteuse (voie X) donne un résultat nul. Par contre le signal de la voie Y qui supporte l'information se trouve en phase avec le signal $V_0$, il en résulte que l'information peut être récupérée directement sur la sortie du circuit de comparaison de phase 7 pour être traitée puis utilisée. Le traitement consiste, de manière classique, en un filtrage suivi d'une régénération. Le filtrage est effectué par le filtre 11 qui est un filtre de type passe-bas du genre filtre de Nyquist dont la bande est de l'ordre de la moitié du débit d'information, c'est-à-dire de la moitié du rythme, soit $\frac{f_r}{2} = 17 \text{ MHz.}$

Le système pour la transmission de signaux numériques qui vient d'être décrit a été conçu pour adapter facilement des liaisons par faisceaux hertziens analogiques existantes, à la transmission numérique. De tels systèmes pour la transmission de signaux numériques peuvent être utilisés pour réaliser des installations simples et peut coûteuses.

Sans sortir du cadre de l'invention, il est possible de concevoir d'autres systèmes pour la transmission d'informations numériques, en particulier des systèmes où l'information n'est pas codée selon le code HDB3 mais selon un autre code tel que le signal codé obtenu soit, comme dans le cas du HDB3, sans densité d'énergie à la fréquence zéro. De même le nombre n d'états de l'amplitude de ce signal codé peut être différent de 3 comme dans l'exemple décrit; il peut par exemple être de 2 ou de 4.

Il est également possible, pour l'opération de multiplication effectuée dans le dispositif d'émission, d'utiliser un générateur de fréquences fournissant non pas un signal rectangulaire mais un signal sinusoïdal ce qui conduit à des configurations spectrales un peu différentes puisqu'il y a alors modulation du spectre mais la réception est toujours possible par un dispositif selon le schéma de la figure 3.

**Revendications**

1. Dispositif émetteur pour la transmission de signaux numériques ayant une composante continue nulle, comportant: un accès recevant les signaux numériques (A), un modulateur de fréquence (4) et des moyens de couplage entre l'accès et l'entrée du modulateur de fréquence, caractérisé en ce que, dans le but de générer une raie à la fréquence porteuse dans le signal à émettre, les moyens de couplage sont constitués par un circuit de multiplication (2) ayant une première entrée reliée à l'accès et une sortie reliée à l'entrée du modulateur de fréquence et un générateur de fréquences (3) relié à la seconde entrée du circuit de multiplication et fournissant un signal dont la fréquence est égale au rythme des signaux numériques (correspondant à la fréquence maximale de changement d'état du signal).

2. Dispositif émetteur selon la revendication 1, caractérisé en ce qu'il est destiné à opérer avec des signaux numériques codés selon le code HDB3 et en ce que le générateur de fréquences délivre des signaux rectangulaires et est synchronisé sur les fronts des signaux numériques.

3. Dispositif récepteur propre à coopérer avec un dispositif émetteur selon la revendication 1, comportant: un circuit de comparaison de phase (7) fournissant un signal de sortie nul lorsqu'il reçoit sur ses deux entrées des signaux en quadrature; une entrée de signal modulé couplée à la première entrée du circuit de comparaison de phase; un filtre de boucle (8) dont l'entrée est couplée à la sortie du circuit de comparaison de phase; un oscillateur variable (10) dont l'entrée est couplée à la sortie du filtre de boucle et dont la sortie est couplée à la seconde entrée du circuit de comparaison de phase; et un dispositif de filtrage d'information (11) couplé à la sortie du circuit de comparaison de phase.

**Claims**

1. Transmitter device for the transmission of digital signals without direct component, comprising: a port receiving the digital signals (A), a frequency modulator (4) and coupling means between the port and the input of the frequency modulator, characterized in that, in order to generate a carrier frequency line in the signal to be transmitted, the coupling means are formed of a multiplication circuit (2) having a first input connected to the port and an output connected to the input of the frequency modulator and a frequency generator (3) connected to the second input of the multiplication circuit and supplying a signal the frequency of which is equal to the rhythm of the digital signals (corresponding to the maximum state changing frequency of the signal).

2. Transmitter device according to claim 1, characterized in that it is intended to operate with digital signals coded in accordance with the HDB3 code and in that the frequency generator supplies rectangular signals and is synchronized to the edges of the digital signals.

3. Receiver device for cooperation with a transmitter device of claim 1, comprising: a phase comparator circuit (7) supplying a vanishing output signal upon reception of quadrature signals on its two inputs; a modulated signal input coupled to the first input of the phase comparator circuit; a loop filter (8) the input of which is coupled to the output of the phase comparator circuit; a variable oscillator (10) the input of which is coupled to the output of the loop filter and the output of which is coupled to the second input of the phase comparator circuit; and an information filtering device (11) coupled to the output of the phase comparator circuit.

**Patentansprüche**

1. Sendevorrichtung für die Übertragung von Digitalsignalen, die eine verschwindende Gleichkomponente besitzen, enthaltend: einen die Digitalsignale (A) empfangenden Zugang, einen Frequenzmodulator (4) und Kopplungsmittel zwischen dem Zugang und dem Eingang des Frequenzmodulators, dadurch gekennzeichnet, dass zur Erzeugung einer Trägerfrequenzlinie in dem auszusenden Signal die Kopplungsmittel gebildet sind aus einer Multiplizierschaltung (2), deren erster Eingang mit dem Zugang und deren Ausgang mit dem Eingang des Frequenzmodulators verbunden ist, und aus einem Frequenzgenerator (3), der mit dem zweiten Eingang der Multiplizierschaltung verbunden ist und ein Signal liefert, dessen Frequenz gleich dem Rhythmus der Digitalsignale ist (entsprechend der maximalen Zustandsänderungsfrequenz des Signals).

2. Sendevorrichtung nach Anspruch 1, dadurch gekennzeichnet, dass sie dazu bestimmt ist, mit Digitalsignalen betrieben zu werden, die nach dem Code HDB3 kodiert sind, und dass der Frequenzgenerator Rechtecksignale abgibt und auf die Flanken der Digitalsignale synchronisiert ist.

3. Empfängervorrichtung, die zum Zusammenwirken mit einer Sendevorrichtung nach Anspruch 1 geeignet ist, enthaltend: eine Phasenkomparatorschaltung (7), welche ein verschwindendes Ausgangssignal abgibt, wenn sie an ihren zwei Eingängen um 90° gegeneinander phasenverschobene Signale empfängt; einen Eingang für ein moduliertes Signal, welcher an den ersten Eingang der Phasenkomparatorschaltung angekoppelt ist; ein Schleifenfilter (8), dessen Eingang an den Ausgang der Phasenkomparatorschaltung angekoppelt ist; einen variablen Oszillator (10), dessen Eingang an den Ausgang des Schleifenfilters angekoppelt ist und dessen Ausgang an den zweiten Eingang der Phasenkomparatorschaltung angekoppelt ist; und eine Informations-Filtervorrichtung (11), welche an den Ausgang der Phasenkomparatorschaltung angekoppelt ist.

0 035 434

FIG_1

FIG_2

FIG_3